# EUROPEAN PATENT APPLICATION

(11) **EP 4 596 928 A1**
(43) Date of publication of application: **06.08.2025**
(21) Application number: 23884958.2
(22) Date of filing: 31.10.2023
(51) Int. Cl.: F16K 1/42, F25B 41/34, F16K 1/32

(54) **ELECTRONIC EXPANSION VALVE**

(30) Priority: 31.10.2022 CN 202222918868 U; 31.10.2022 CN 202222928383 U
(71) Applicant: Zhejiang Dunan Artificial Environment Co., Ltd., Shaoxing Zhejiang 311835 (CN)
(72) Inventor: HUANG, Hongfeng, Shaoxing, Zhejiang 311835 (CN); ZHAO, Jun, Shaoxing, Zhejiang 311835 (CN); CHEN, Yonghao, Shaoxing, Zhejiang 311835 (CN); WANG, Miaomiao, Shaoxing, Zhejiang 311835 (CN); CHEN, Canfeng, Shaoxing, Zhejiang 311835 (CN)
(74) Representative: Dehns Germany Partnerschaft mbB
(86) International application number: PCT/CN2023/128836
(87) International publication number: WO 2024/094029

(57) **Abstract**

An electronic expansion valve, including a valve seat (10), a nut seat (20), a guide sleeve (30) and a valve core assembly (40). The valve seat (10) has a valve cavity (101) and a mounting port (102), which are in communication with each other, the valve seat (10) further has a valve port (103), the valve port (103) is in communication with the valve cavity (101), and the valve seat (10) is provided with a first limiting structure. The nut seat (20) has a first end and a second end, which are disposed opposite to each other, the first end of the nut seat (20) is disposed at the mounting port (102), and the first end of the nut seat (20) is provided with a second limiting structure. The guide sleeve (30) is disposed in the valve cavity (101), the guide sleeve (30) has a first end and a second end, which are disposed opposite to each other, an outer peripheral surface of the first end of the guide sleeve (30) is in limiting fit with the first limiting structure, and an outer peripheral surface of the second end of the guide sleeve (30) is in limiting fit with the second limiting structure, so as to limit a position of the guide sleeve (30). The valve core assembly (40) is disposed through the guide sleeve (30), and the valve core assembly (40) is used for adjusting a flow rate at the valve port (103). The electronic expansion valve improves the adjustment precision of the valve core assembly for the flow rate at the valve port.

## Description

The present invention claims the priority of Chinese Patent Application 202222918868.2, filed in the State Intellectual Property Office of China on October 31, 2022, and entitled "Electronic Expansion Valve"; and
the present invention claims the priority of Chinese Patent Application 202222928383.1, filed in the State Intellectual Property Office of China on October 31, 2022, and entitled "Electronic Expansion Valve".

### Technical Field

The present invention relates to the technical field of valves, and in particular to an electronic expansion valve.

### Background

A valve seat of an electronic expansion valve is provided with a valve port, a nut seat is interconnected with the valve seat, a guide sleeve of the electronic expansion valve is disposed between the nut seat and the valve seat and guides a movement of a valve core assembly, and the valve core assembly is used to adjust the flow rate of the valve port. However, in a prior art, the coaxiality between the guide sleeve and the valve seat is poor, resulting in a poor coaxiality between the valve core assembly and the valve seat, so that the adjustment precision of the valve core assembly for the flow rate at the valve port is low.

### Summary

Some embodiments of the present invention provides an electronic expansion valve, so as to solve the problem of low adjustment precision of a valve core assembly for the flow rate at a valve port in the prior art.

Some embodiments of the present invention provides an electronic expansion valve, including: a valve seat, having a valve cavity and a mounting port, which are in communication with each other, wherein the valve seat further has a valve port, the valve port is in communication with the valve cavity, and the valve seat is provided with a first limiting structure; a nut seat, having a first end and a second end, which are disposed opposite to each other, wherein the first end of the nut seat is disposed at the mounting port, and the first end of the nut seat is provided with a second limiting structure; a guide sleeve, disposed in the valve cavity, wherein the guide sleeve has a first end and a second end, which are disposed opposite to each other, an outer peripheral surface of the first end of the guide sleeve is in limiting fit with the first limiting structure, and an outer peripheral surface of the second end of the guide sleeve is in limiting fit with the second limiting structure, so as to limit a position of the guide sleeve; and a valve core assembly, disposed through the guide sleeve, wherein the valve core assembly is used to adjust a flow rate at the valve port.

Further, a bottom of the valve cavity is provided with a limiting groove, the limiting groove is located on a periphery of the valve port, and the first end of the guide sleeve is disposed through the limiting groove and is in limiting fit with an inner wall of the limiting groove.

Further, a cross section of the limiting groove is circular, and the first end of the guide sleeve is in interference fit with the limiting groove.

Further, a depth of the limiting groove is greater than or equal to 1.5 mm.

Further, the valve port is disposed at a bottom of the limiting groove and is coaxially disposed with the limiting groove.

Further, the valve seat includes a body portion and a protrusion portion, which are integrally connected in an axial direction, and an end of the valve port away from the limiting groove extends to an end face of the protrusion portion.

Further, the first end of the nut seat is provided with a limiting hole, the limiting hole is internally provided with a stepped surface, the second end of the guide sleeve is disposed through the limiting hole and is in interference fit with the limiting hole, and an end face of the second end of the guide sleeve abuts against the stepped surface.

Further, a side wall of the valve seat is provided with a first communicating hole, the electronic expansion valve further includes a first communicating pipe and a second communicating pipe, the first communicating pipe is in communication with the first communicating hole, and the second communicating pipe is sleeved on a periphery of the protrusion portion and is welded and fixed with the valve seat.

Further, an end face of an end of the body portion connected with the protrusion portion is provided with an avoidance groove, the avoidance groove is annularly formed in the periphery of the protrusion portion, a diameter of the avoidance groove is greater than an outer diameter of the second communicating pipe, and an end portion of the second communicating pipe is located in the avoidance groove.

Further, in an axial direction of the valve seat, there is an interval between the first communicating hole and an inner end face of an end of the valve seat away from the mounting port.

By applying the technical solutions of the present invention, the first limiting structure and the second limiting structure respectively limit the outer peripheral surface of the first end of the guide sleeve and the outer peripheral surface of the second end of the guide sleeve, so as to improve the coaxiality among the guide sleeve, the nut seat and the valve seat. Specifically, the first limiting structure and the second limiting structure respectively limit the outer peripheral surface of the first end of the guide sleeve and the outer peripheral surface of the second end of the guide sleeve, so that the coaxiality of the outer peripheral surface of the guide sleeve with the valve seat and the nut seat can be ensured as long as the machining precision of the outer peripheral surface of the guide sleeve is ensured, thereby improving the mounting precision between the valve seat and the guide sleeve and the mounting precision between the guide sleeve and the nut seat, ensuring the stability of the guide sleeve, reducing the inclination of the guide sleeve, ensuring the coaxiality between the valve core assembly and the valve seat, and ensuring the accuracy of a valve opening and closing process and a flow rate adjustment process.

### Brief Description of the Drawings

The drawings, which constitute a part of the present invention, are used to provide a further understanding of the present invention, and schematic embodiments of the present invention and descriptions thereof are used to explain the present invention, but do not constitute an improper limitation on the present invention. In the drawings:
Fig. 1 illustrates a schematic structural diagram of an electronic expansion valve provided in Embodiment 1 of the present invention;
Fig. 2 illustrates a schematic structural diagram of cooperation between a valve seat and a guide sleeve of an electronic expansion valve provided in Embodiment 1 of the present invention;
Fig. 3 illustrates a schematic structural diagram of a valve seat of an electronic expansion valve provided in Embodiment 1 of the present invention;
Fig. 4 illustrates a schematic structural diagram of an electronic expansion valve provided in Embodiment 2 of the present invention;
Fig. 5 illustrates a schematic diagram of a partial structure of an electronic expansion valve provided in Embodiment 2 of the present invention;
Fig. 6 illustrates a schematic structural diagram of one motion guide sheet provided in Embodiment 2 of the present invention;
Fig. 7 illustrates a schematic structural diagram of another motion guide sheet provided in Embodiment 2 of the present invention;
Fig. 8 illustrates a schematic diagram of a partial structure of an electronic expansion valve provided in Embodiment 2 of the present invention;
Fig. 9 illustrates a schematic structural diagram of mutual cooperation of a nut seat, a spiral guide rail and a stop ring provided in Embodiment 2 of the present invention;
Fig. 10 illustrates a schematic structural diagram of a stop ring provided in Embodiment 2 of the present invention; and
Fig. 11 illustrates a front view of a stop ring provided in Embodiment 2 of the present invention.

The above drawings include the following reference signs:
10. valve seat; 101. valve cavity; 102. mounting port; 103. valve port;
104. first limiting groove;
105. first communicating hole;
11. body portion; 111. avoidance groove;
12. protrusion portion;
20. nut seat; 201. limiting hole;
21. first stop portion; 22. second stop portion;
23. nut body; 24. connecting plate;
30. guide sleeve; 301. circulation hole;
40. valve core assembly;
50. screw rod;
60. motion guide sheet;
61. connection segment; 611. third punch hole;
62. extension segment;
621. first segment; 622. bending structure; 623. second segment;
70. spiral guide rail;
80. stop ring: 81. first matching portion; 82. second matching portion;
90. rotor assembly;
91. rotor body; 92. connecting piece; 921. first punch hole; 922. second limiting groove; 923. second punch hole;
01. first communicating pipe; 02. second communicating pipe;
100. bushing.

### Detailed Description of the Embodiments

A clear and complete description of technical solutions in the embodiments of the present invention will be given below, in combination with the drawings in the embodiments of the present invention. Apparently, the embodiments described below are merely a part, but not all, of the embodiments of the present invention. The following description of at least one exemplary embodiment is merely illustrative in nature and is in no way intended to limit the present invention and its application or usage. All of other embodiments, obtained by those ordinary skilled in the art based on the embodiments in the present invention without any creative effort, fall into the protection scope of the present invention.

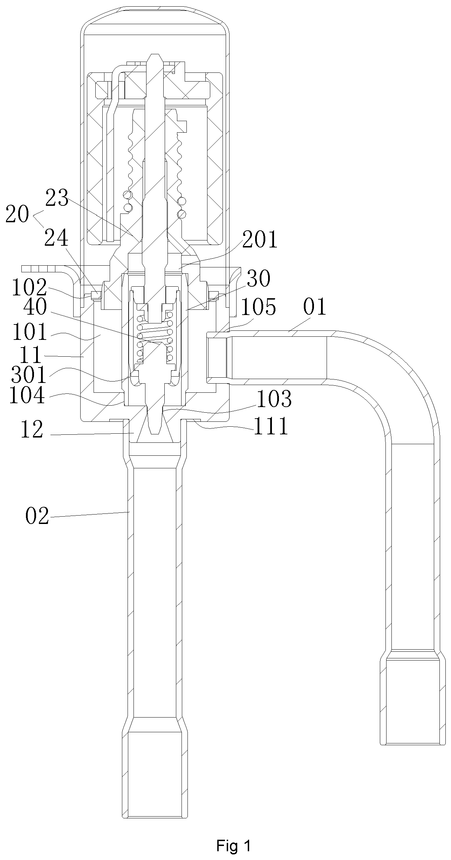

As shown in Fig. 1 to Fig. 3, Embodiment 1 of the present invention provides an electronic expansion valve, including a valve seat 10, a nut seat 20, a guide sleeve 30 and a valve core assembly 40, wherein the valve seat 10 has a valve cavity 101 and a mounting port 102, which are in communication with each other, the valve seat 10 further has a valve port 103, the valve port 103 is in communication with the valve cavity 101, and the valve seat 10 is provided with a first limiting structure. The nut seat 20 has a first end and a second end, which are disposed opposite to each other, the first end of the nut seat 20 is disposed at the mounting port 102, and the first end of the nut seat 20 is provided with a second limiting structure. The guide sleeve 30 is disposed in the valve cavity 101, the guide sleeve 30 has a first end and a second end, which are disposed opposite to each other, an outer peripheral surface of the first end of the guide sleeve 30 is in limiting fit with the first limiting structure, and an outer peripheral surface of the second end of the guide sleeve 30 is in limiting fit with the second limiting structure, so as to limit a position of the guide sleeve 30. The valve core assembly 40 is disposed through the guide sleeve 30, and the valve core assembly 40 is used to adjust a flow rate at the valve port 103.

By applying the technical solutions of the present invention, the first limiting structure and the second limiting structure respectively limit the outer peripheral surface of the first end of the guide sleeve 30 and the outer peripheral surface of the second end of the guide sleeve 30, so as to improve the coaxiality among the guide sleeve 30, the nut seat 20 and the valve seat 10. Specifically, the first limiting structure and the second limiting structure respectively limit the outer peripheral surface of the first end of the guide sleeve 30 and the outer peripheral surface of the second end of the guide sleeve 30, so that the coaxiality of the outer peripheral surface of the guide sleeve 30 with the valve seat 10 and the nut seat 20 can be ensured as long as the machining precision of the outer peripheral surface of the guide sleeve 30 is ensured, thereby improving the mounting precision between the valve seat 10 and the guide sleeve 30 and the mounting precision between the guide sleeve 30 and the nut seat 20, ensuring the stability of the guide sleeve 30, reducing the inclination of the guide sleeve 30, ensuring the coaxiality between the valve core assembly 40 and the valve seat 10, and ensuring the accuracy of a valve opening and closing process and a flow rate adjustment process. In conventional technical solutions, an inner peripheral surface of the first end of the guide sleeve 30 is in limiting fit with the valve seat 10, and an outer peripheral surface of the guide sleeve 30 is in limiting fit with the nut seat 20, in this way, it is difficult to ensure the coaxiality between the inner peripheral surface and the outer peripheral surface of the guide sleeve 30, therefore it is difficult to ensure the coaxiality between the guide sleeve 30 and the nut seat 20 and between the guide sleeve 30 and the valve seat 10, thus affecting the coaxiality between the valve core assembly 40 and the valve seat 10 and affecting the adjustment precision of the valve core assembly 40 for flow rate at the valve port 103. Moreover, compared with the prior art, by means of the settings in the present solution, the requirements for the coaxiality between the outer peripheral surface and the inner peripheral surface of the guide sleeve 30 are reduced, so that the machining cost of the guide sleeve 30 is reduced.

In the present solution, the nut seat 20 includes a nut body 23 and a connecting plate 24. The connecting plate 24 and the nut body 23 are separately disposed, the connecting plate 24 is annularly sleeved on a periphery of a first end of the nut body 23, the connecting plate 24 is in limiting fit with the nut body 23 in an axial direction, the connecting plate 24 is in interference fit with the nut body 23 in a circumferential direction, and the connecting plate 24 is in clearance fit with the nut body 23 in a radial direction. The connecting plate 24 and the first end of the nut body 23 are both received into the mounting port 102, and the connecting plate 24 is welded with the valve seat 10.

By means of the above settings, the connecting plate 24 can move in a radial direction of the nut body 23, but cannot rotate in a circumferential direction of the nut body 23, thereby avoiding a situation in a prior art of over-positioning of the nut body 23 in the radial direction due to a fact that the connecting plate 24 is respectively in close fit with the valve seat 10 and the nut body 23 during the process of loading the nut seat 20 into the valve seat 10, reducing the assembly difficulty of the nut seat 20, and improving the coaxiality between the nut seat 20 and the valve seat 10.

In some embodiments, an outer side wall of the first end of the nut body 23 is provided with a boss structure, the connecting plate 24 is located on a side of the boss structure away from an end face of the first end of the nut body 23, and the connecting plate 24 abuts against the boss structure.

The outer side wall of the first end of the nut body 23 is provided with a limiting boss, an inner side wall of the connecting plate 24 is provided with a limiting groove, the limiting boss is in interference fit with the limiting groove in the circumferential direction, and the limiting boss is in clearance fit with the limiting groove in the radial direction.

In some embodiments, a bottom of the valve cavity 101 is provided with a first limiting groove 104, the first limiting groove 104 is located on a periphery of the valve port 103, the first limiting groove 104 is coaxial with the valve port 103, and the first end of the guide sleeve 30 is disposed through the first limiting groove 104 and is in limiting fit with an inner wall of the first limiting groove 104. The first limiting groove 104 has a simple structure and facilitates the machining and forming of the valve seat 10. A side wall of the guide sleeve 30 is provided with a plurality of circulation holes 301, so that an inside and outside of the guide sleeve 30 communicate with each other via the circulation holes 301. The number of the circulation holes 301 is not limited in the present solution, and in the present embodiment, four circulation holes 301 are annularly formed in a circumferential direction of the guide sleeve at intervals.

In an embodiment, a cross section of the first limiting groove 104 is circular, and the first end of the guide sleeve 30 is in interference fit with the first limiting groove 104. By setting the cross section of the first limiting groove 104 to be circular, the machining and forming the valve seat 10 can be facilitated. Moreover, since the first end of the guide sleeve 30 is in interference fit with the first limiting groove 104, the convenience and stability of mounting the first end of the guide sleeve 30 and the valve seat 10 can be ensured. A diameter of the outer peripheral surface of the guide sleeve 30 may be the same in an axial direction of the guide sleeve 30.

In some embodiments, a depth of the first limiting groove 104 is greater than or equal to 1.5 mm. When the depth of the first limiting groove 104 is less than 1.5 mm, the guide sleeve 30 may incline to affect the coaxiality between the guide sleeve 30 and the valve seat 10, and when the depth of the first limiting groove 104 is less than 1.5 mm, the connection stability between the guide sleeve 30 and the valve seat 10 is poor. In the present solution, by making the depth of the first limiting groove 104 be greater than or equal to 1.5 mm, not only can the coaxiality between the guide sleeve 30 and the valve seat 10 be ensured, but the connection stability between the guide sleeve 30 and the valve seat 10 can also be ensured.

The depth of the first limiting groove 104 may be set as 1.5 mm, 1.7 mm, or 1.9 mm. In the present embodiment, the depth of the first limiting groove 104 is 1.5 mm.

In an embodiment, the valve port 103 is disposed at a bottom of the first limiting groove 104 and is coaxially disposed with the first limiting groove 104. In this way, the matching precision between the valve core assembly 40 and the valve port 103 can be ensured, and the adjustment precision of the valve core assembly 40 for the flow rate at the valve port 103 is further ensured.

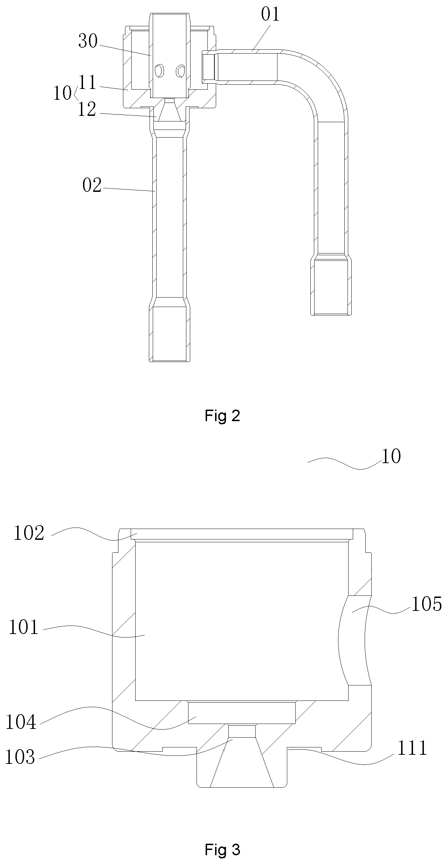

As shown in Fig. 1 and Fig. 2, the valve seat 10 includes a body portion 11 and a protrusion portion 12, which are integrally connected in the axial direction, and an end of the valve port 103 away from the first limiting groove 104 extends to an end face of the protrusion portion 12, wherein the valve seat 10 may be integrally formed by using a cold heading process and may also be formed by finish turning.

In the present solution, the valve port 103 includes a cylindrical hole and a taper hole, which are in communication with each other in sequence in the axial direction of the valve seat 10, an end of the cylindrical hole away from the taper hole is in communication with the first limiting groove 104, an end of the taper hole interconnected with the cylindrical hole is located on the body portion 11, a diameter of the taper hole gradually increases in a direction away from the cylindrical hole, and an end of the taper hole away from the cylindrical hole extends to an end face of the protrusion portion 12. In this way, the convenience of machining the valve port 103 can be ensured, and the precise flow rate regulation at the valve port 103 can be ensured by the valve core assembly 40.

As shown in Fig. 1, the first end of the nut seat 20 is provided with a limiting hole 201, the limiting hole 201 is internally provided with a stepped surface, the second end of the guide sleeve 30 is disposed through the limiting hole and is in interference fit with the limiting hole 201, and an end face of the second end of the guide sleeve 30 abuts against the stepped surface.

In the present solution, the limiting hole includes a first hole segment and a second hole segment, which are communication with each other in sequence in an axial direction of the nut seat 20, the first hole segment is disposed close to the valve port 103, a diameter of the first hole segment is greater than a diameter of the second hole segment, and a stepped surface is formed between the first hole segment and the second hole segment, the second end of the guide sleeve 30 is disposed through the first hole segment and is in interference fit with the first hole segment. The limiting hole 201 has a simple structure and can ensure the convenience of mounting the nut seat 20 and the guide sleeve 30.

In some embodiments, when the electronic expansion valve is assembled, first, the first end of the guide sleeve 30 is disposed through the first limiting groove 104, and then the first end of the nut seat 20 is sleeved on the second end of the guide sleeve 30, so that the first end and the second end of the guide sleeve 30 are respectively interconnected with the valve seat 10 and the nut seat 20.

As shown in Fig. 1 and Fig. 3, in some embodiments, a side wall of the valve seat 10 is provided with a first communicating hole 105, the electronic expansion valve further includes a first communicating pipe 01 and a second communicating pipe 02, the first communicating pipe 01 is in communication with the first communicating hole 105, and the second communicating pipe 02 is sleeved on a periphery of the protrusion portion 12 and is welded and fixed with the valve seat 10. In the present embodiment, the first communicating pipe 01 is disposed through the first communicating hole 105 and is welded and fixed with the valve seat 10, and the second communicating pipe 02 is sleeved on the periphery of the protrusion portion 12. In this way, the convenience and sealing performance of connecting the second communicating pipe 02 and the valve seat 10 can be ensured.

In some embodiments, an end face of an end of the body portion 11 connected with the protrusion portion 12 is provided with an avoidance groove 111, the avoidance groove 111 is annularly formed in the periphery of the protrusion portion 12, a diameter of the avoidance groove 111 is greater than an outer diameter of the second communicating pipe 02, and an end portion of the second communicating pipe 02 is located in the avoidance groove 111. The avoidance groove 111 and the protrusion portion 12 are coaxially disposed, and the avoidance groove 111 is used for placing a welding ring, the welding ring is annularly disposed on the periphery of the protrusion portion 12, and the welding ring is in interference fit with the avoidance groove 111. In this way, the welding ring can be positioned, thereby ensuring the stability of the welding ring, and ensuring the welding effect of the second communicating pipe 02.

In an embodiment, in the axial direction of the valve seat 10, there is an interval between the first communicating hole 105 and an inner end face of an end of the valve seat 10 away from the mounting port 102. In this way, the first communicating hole 105 can be conveniently machined, and the first communicating pipe 01 can be conveniently installed.

Embodiment 2 of the present invention provides an electronic expansion valve, including: a valve seat 10, a bushing 100, a nut seat 20, a guide sleeve 30, a valve core assembly 40, a screw rod 50, a motion guide sheet 60, a spiral guide rail 70, a stop ring 80 and a rotor assembly 90, wherein the valve seat 10 has a mounting port 102, a valve cavity 101 and a valve port 103, which are in communication with each other in sequence in an axial direction, and the valve port 103 is disposed on an end of the valve seat 10. The valve core assembly 40 is movably disposed in the valve cavity 101, and the valve core assembly 40 is used for adjusting the flow rate at the valve port 103. The guide sleeve 30 is disposed in the valve cavity 101, an end of the guide sleeve 30 is in limiting fit with the valve seat 10, and the valve core assembly 40 is movably disposed through the guide sleeve 30 and is in guide fit with the guide sleeve 30. The rotor assembly 90 is rotatably disposed in the bushing 100. The nut seat 20 has a first end and a second end, which are disposed opposite to each other, an outer diameter of the second end is less than an outer diameter of the first end, the first end includes a conical segment and a cylindrical segment, which are connected with each other, the conical segment is disposed close to the second end, an outer diameter of the conical segment gradually increases in a direction from the second end to the first end, the first end is disposed at the mounting port 102 of the valve seat 10, an other end of the guide sleeve 30 is disposed through the first end of the nut seat 20 and is in limiting fit with the nut seat 20, and the second end of the nut seat 20 is disposed through the rotor assembly 90. The screw rod 50 is disposed through the nut seat 20 and is in threaded fit with the nut seat 20, the screw rod 50 has a third end and a fourth end, which are disposed opposite to each other, the third end of the screw rod 50 is connected with the rotor assembly 90, and the fourth end of the screw rod 50 is disposed through the guide sleeve 30 and is in driving connection with the valve core assembly 40, so that the valve core assembly 40 is able to adjust the flow rate at the valve port 103. The motion guide sheet 60 includes a connection segment 61 and an extension segment 62, which are connected with each other, the connection segment 61 is connected with the rotor assembly 90 and/or the screw rod 50, the extension segment 62 is located on an outer side of the nut seat 20, the extension segment 62 has a connection end and a free end, which are disposed opposite to each other, the free end is disposed towards the nut seat 20, the connection end is connected with the connection segment 61, and a distance between the connection end and an axis of the screw rod 50 is less than a distance between the free end and the axis of the screw rod 50. The spiral guide rail 70 is annularly disposed on a periphery of the nut seat 20. The stop ring 80 is slidably disposed in the spiral guide rail 70, the stop ring 80 has a first limit position and a second limit position, which are disposed opposite to each other in the axial direction of the nut seat 20, and the motion guide sheet 60 is in driving connection with the stop ring 80, so that the stop ring 80 is able to move between the first limit position and the second limit position. All the valve seat 10, the nut seat 20, the guide sleeve 30, the valve port 103, the valve core assembly 40, the rotor assembly 90, the screw rod 50, the spiral guide rail 70 and the stop ring 80 are coaxially disposed.

By applying the technical solutions of the present invention, a centrifugal force of the motion guide sheet 60 during the rotation of the motion guide sheet 60 can be reduced, thereby ensuring the stability during the rotation of the motion guide sheet 60 and ensuring the operation stability of the electronic expansion valve. Specifically, since the distance between the free end of the extension segment 62 and the nut seat 20 is greater than the distance between the connection end and the nut seat 20, it can be ensured that the free end avoids the nut seat 20 during rotation and movement, that is, the situation in which mutual interference occurs between the motion guide sheet 60 and the nut seat 20 is avoided. Compared to a distance between the free end and the screw rod 50, a distance between the connection end and the screw rod 50 is smaller, a centrifugal force of the connection end can be relatively reduced, the centrifugal force of the motion guide sheet 60 during rotation is reduced, the shaking amount of the motion guide sheet 60 during rotation is reduced, the shaking amount of the rotor assembly during motion is reduced, the stability during the motion of the screw rod 50 is ensured, the precision of the valve core assembly 40 adjusting the flow rate at the valve port 103 is ensured, and the stability of the electronic expansion valve during operation is ensured.

In the present solution, the nut seat 20 includes a nut body 23 and a connecting plate 24. The connecting plate 24 and the nut body 23 are separately disposed, the connecting plate 24 is annularly sleeved on a periphery of a first end of the nut body 23, the connecting plate 24 is in limiting fit with the nut body 23 in an axial direction, the connecting plate 24 is in interference fit with the nut body 23 in a circumferential direction, and the connecting plate 24 is in clearance fit with the nut body 23 in a radial direction. The connecting plate 24 and the first end of the nut body 23 are both disposed through the mounting port 102, and the connecting plate 24 is welded with the valve seat 10.

By means of the above settings, the connecting plate 24 can move in a radial direction of the nut body 23, but cannot rotate in a circumferential direction of the nut body 23, thereby avoiding the situation in a prior art of over-positioning of the nut body 23 in the radial direction due to a fact that the connecting plate 24 is respectively in close fit with the valve seat 10 and the nut body 23 during the process of loading the nut seat 20 into the valve seat 10, reducing the assembly difficulty of the nut seat 20, and improving the coaxiality between the nut seat 20 and the valve seat 10.

In an embodiment, an outer side wall of the first end of the nut body 23 is provided with a boss structure, the connecting plate 24 is located on a side of the boss structure away from an end face of the first end of the nut body 23, and the connecting plate 24 abuts against the boss structure.

The outer side wall of the first end of the nut body 23 is provided with a limiting boss, an inner side wall of the connecting plate 24 is provided with a limiting groove, the limiting boss is in interference fit with the limiting groove in the circumferential direction, and the limiting boss is in clearance fit with the limiting groove in the radial direction.

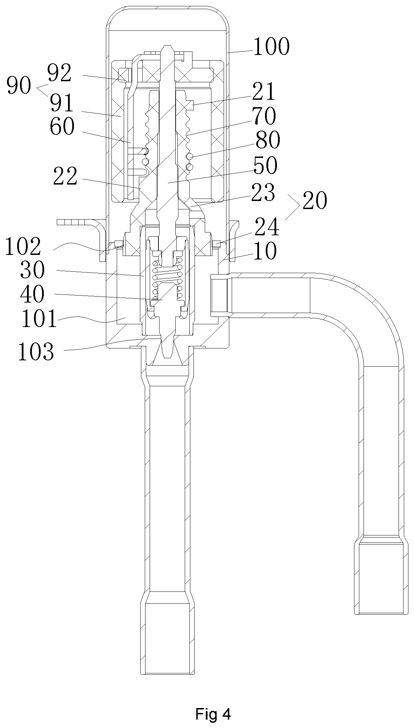

As shown in Fig. 4 to Fig. 7, in some embodiments, the extension segment 62 includes a first segment 621, a bent structure 622 and a second segment 623, which are connected in sequence, wherein the first segment 621 is connected with the connection segment 61, and an end of the second segment 623 away from the first segment 621 forms the free end. Due to the setting of the bent structure 622, a distance between the first segment 621 and the screw rod 50 is different from a distance between the second segment 623 and the screw rod 50. In the present embodiment, the motion guide sheet 60 is an integrally formed structure, so that the structural stability of the motion guide sheet 60 can be ensured.

In the present embodiment, an extension direction of the first segment 621 is the same as an axial direction of the screw rod 50, and an extension direction of the second segment 623 is the same as the axial direction of the screw rod 50. In this way, it can be ensured that the first segment 621 and the second segment 623 are parallel to each other, and the stability of the motion guide sheet 60 during motion is further ensured.

The specific form of the bent structure 622 is not defined in the present solution. In the present embodiment, the bent structure 622 includes a transition segment, the transition segment may be an inclined transition segment, an included angle is formed between an extension direction of the inclined transition segment and the axial direction of the screw rod 50, and a distance between the inclined transition segment and an axis of the rotor assembly 90 gradually increases in a direction from the second end to the first end of the nut seat 20. By means of the above settings, the convenience during the machining of the extension segment 62 can be ensured, and the connection stability of the inclined transition segment with the first segment 621 and the second segment 623 is ensured. The transition segment may also be a horizontal transition segment, and when the transition segment is a horizontal transition segment, an extension direction of the horizontal transition segment is the same as the radial direction of the screw rod 50. The bent structure 622 may also include a plurality of inclined transition segments and a plurality of horizontal transition segments, which are connected with each other, and the bent structure 622 may also be set as a stepped structure.

In an embodiment, in the axial direction of the screw rod 50, a length of the bent structure 622 is less than a length of the first segment 621, and the length of the bent structure 622 is less than a length of the second segment 623. In the present embodiment, the specific lengths of the first segment 621 and the second segment 623 are not limited, as long as it is ensured that the second segment 623 and the nut seat 20 can avoid each other during the motion of the motion guide sheet 60. In the present embodiment, the specific position of the bent structure 622 is not limited, so that the bent structure 622 may be disposed close to the connection end and may also be disposed close to the free end.

In some embodiments, the rotor assembly 90 includes a rotor body 91 and a connecting piece 92, wherein the rotor body 91 is annularly disposed on the periphery of the nut seat 20, and the connecting piece 92 is disposed on the rotor body 91 and is located on an end of the nut seat 20 away from the valve port 103; and a first punch hole 921 is formed in the connecting piece 92, the connection segment 61 of the motion guide sheet 60 is located on an end of the connecting piece 92 away from the nut seat 20 and is connected with the connecting piece 92 and/or the screw rod 50, and the connection end of the extension segment 62 passes through the first punch hole 921 and connects with the connection segment 61. In the present embodiment, a cross section of the first punch hole 921 is quadrilateral, a shape of the cross section of the connection end matches a shape of the cross section of the first punch hole 921, and the connection end is disposed through the first punch hole 921, so that the relative position between the motion guide sheet 60 and the rotor assembly 90 in a circumferential direction can be further defined, and the connection stability between the motion guide sheet 60 and the rotor assembly 90 is further ensured. At the same time, by means of the above settings, the bent structure 622 is located on a side of the connecting piece 92 close to the nut seat 20, so as to ensure the miniaturization of the entirety in the axial direction.

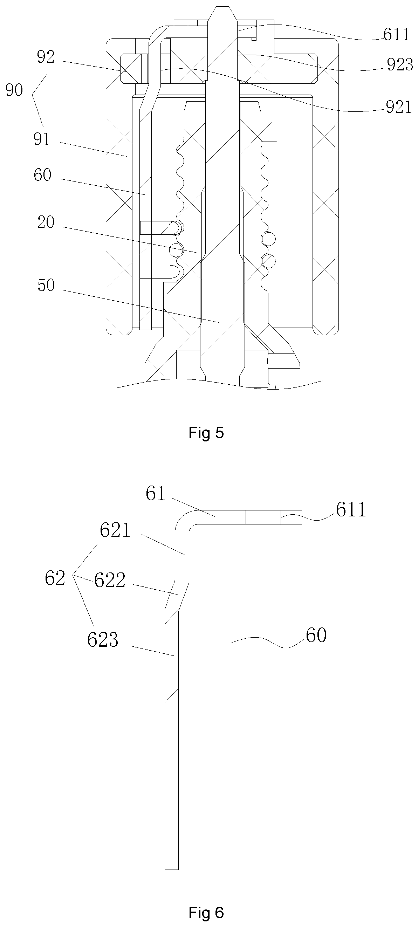

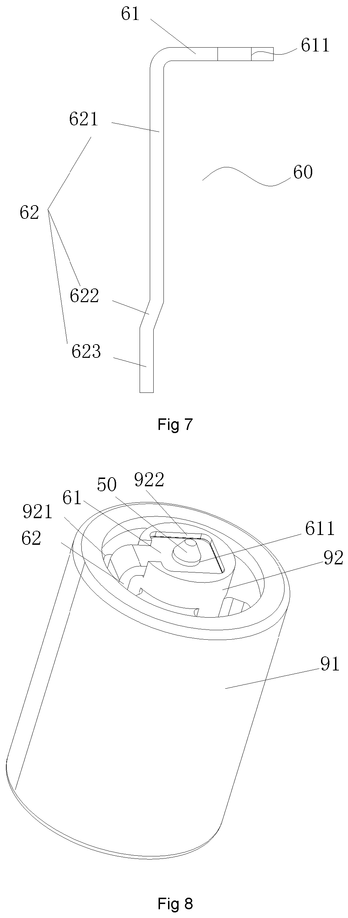

As shown in Fig. 5 and Fig. 8, the specific connection manners of the motion guide sheet 60, the connecting piece 92 and the screw rod 50 are not limited in the present solution, as long as it is ensured that the three components are able to move synchronously. In the present embodiment, the connecting piece 92 includes a connecting plate and a protruding column, which are connected with each other in an axial direction, the protruding column is located on a side of the connecting plate away from the nut seat 20, and the first punch hole 921 is formed in the connecting plate. A side of the protruding column away from the connecting plate is provided with a second limiting groove 922, and at least part of the connection segment 61 is located in the second limiting groove 922 to limit a relative position between the connection segment 61 and the connecting piece 92 in a circumferential direction; and a second punch hole 923 is formed in an end face of an end of the connecting piece 92 close to the nut seat 20, the second punch hole 923 is in communication with the second limiting groove 922, the third end of the screw rod 50 passes through the second punch hole 923 and connects with the connection segment 61, and the third end of the screw rod 50 is connected with the connecting piece 92.

In the present embodiment, the second limiting groove 922 includes a first limiting groove and a second limiting groove, which are in communication with each other in a stepped manner in a radial direction, a width of the first limiting groove is less than a width of the second limiting groove, an end of the first limiting groove away from the second limiting groove extends to a peripheral surface of the protruding column, a cross section of the first limiting groove and a cross section of the second limiting groove are both rectangular, a center line of the second limiting groove coincides with an axis of the connecting piece 92, and a shape of the connection segment 61 of the motion guide sheet 60 matches a shape of the cross section of the second limiting groove 922. A third punch hole 611 is formed in the connection segment 61, the third punch hole 611 and the second punch hole 923 are coaxially disposed, the third end of the screw rod 50 passes through the third punch hole 611 and protrudes from the connection segment 61, and the screw rod 50 is welded with the connection segment 61; and the screw rod 50 has a stepped surface, and the stepped surface is in limiting fit with an end face of an end of the connecting piece 92 close to the nut seat 20. By means of the above settings, the stability and convenience of connections among the motion guide sheet 60, the connecting piece 92 and the screw rod 50 can be ensured.

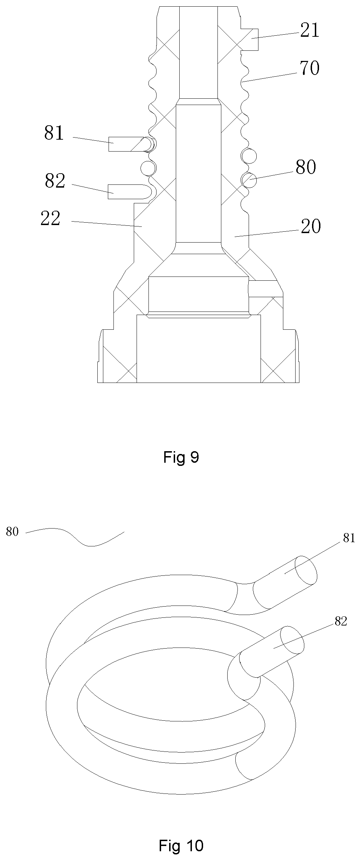

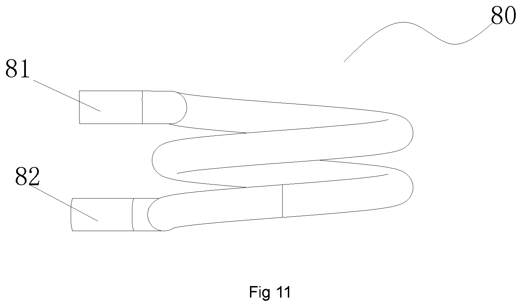

As shown in Fig. 4, Fig. 9 to Fig. 11, the stop ring 80 has a first matching portion 81 and a second matching portion 82, the first matching portion 81 and the second matching portion 82 are distributed at intervals in an axial direction of the stop ring 80, both the first matching portion 81 and the second matching portion 82 extend in a radial direction of the stop ring 80, and both the first matching portion 81 and the second matching portion 82 are able to abut against the motion guide sheet 60. The specific form of the spiral guide rail 70 is not limited in the present embodiment, wherein the spiral guide rail 70 may be set as a form that a spiral spring is sleeved on the periphery of the nut seat 20, and the spiral guide rail 70 may also be set as a structural form integrally formed with the nut seat 20.

In the present embodiment, the spiral guide rail 70 is set as the structural form integrally formed with the nut seat 20. In the present solution, the stop ring 80 includes a spiral body portion, the spiral body portion is adapted to the spiral guide rail 70, and the connection form between the first matching portion 81 and the spiral body portion and the connection form between the second matching portion 82 and the spiral body portion are not limited in the present solution. In the present embodiment, two free ends of the spiral body portion are bent outwards in a radial direction and form the first matching part 81 and the second matching part 82 respectively. In this way, the convenience of machining the stop ring 80 can be improved, and the structural stability of the stop ring 80 can be ensured.

In the present solution, an extension direction of the first matching portion 81 and an extension direction of the second matching portion 82 are not defined, wherein it can be set that the center line of the first matching portion 81 and the center line of the second matching portion 82 are located on the same plane as the axis of the stop ring 80, and both the first matching portion 81 and the second matching portion 82 are located on the same side of the motion guide sheet 60. The motion guide sheet 60 is able to push the stop ring 80 to move through the first matching portion 81 and the second matching portion 82, therefore it can be ensured that the motion guide sheet 60 is in contact with the first matching portion 81 and the second matching portion 82 during motion, thereby ensuring the uniform force distribution of the stop ring 80, ensuring the stability of the stop ring 80 during motion, and reducing the abrasion between the stop ring 80 and the spiral guide rail 70.

It can also be set that the first mating portion 81 and the second mating portion 82 are disposed in a staggered manner in an axial direction of the stop ring 80, and the motion guide sheet 60 is located between the first mating portion 81 and the second mating portion 82. That is, there is an included angle between a projection of a center line of the first matching portion 81 and a projection of a center line of the second matching portion 82 on a vertical plane of the axis of the stop ring 80. In this way, it can be ensured that a rotation path of the motion guide sheet 60 during reversing is as short as possible, thereby ensuring a reversing speed of the electronic expansion valve.

In some embodiments, the electronic expansion valve further includes a first stop portion 21 and a second stop portion 22, both the first stop portion 21 and the second stop portion 22 are disposed on an outer peripheral surface of the nut seat 20, the first stop portion 21 and the second stop portion 22 are distributed in the axial direction of the nut seat 20, the stop ring 80 is located between the first stop portion 21 and the second stop portion 22, the first stop portion 21 is in stop fit with the first matching portion 81, and the second stop portion 22 is in stop fit with the second matching portion 82. In the present embodiment, the first stop portion 21 and the second stop portion 22 are respectively a first stop protrusion and a second stop protrusion, both the first stop protrusion and the second stop protrusion are integrally formed with the nut seat 20, and the first stop protrusion and the second stop protrusion are respectively located on two ends of the spiral guide rail 70. In this way, the stability of the connections among the nut seat 20, the first stop portion 21 and the second stop portion 22 can be ensured.

It should be noted that terms used herein are for the purpose of describing specific embodiments only, and are not intended to limit the exemplary embodiments according to the present invention. As used herein, unless the context clearly dictates otherwise, a singular form is intended to include a plural form as well. In addition, it should also be understood that, when the terms "contain" and/or "include" are used in the present specification, they indicate the presence of features, steps, operations, devices, components and/or combinations thereof.

Unless specifically stated otherwise, relative arrangements, numerical expressions and numerical values of components and steps set forth in these embodiments do not limit the scope of the present invention. Meanwhile, it should be understood that, for the convenience of description, the dimensions of various portions shown in the drawings are not drawn according to an actual proportional relationship. Techniques, methods and devices known to those ordinary skilled in related arts may not be discussed in detail, but where appropriate, such techniques, methods and devices should be considered as a part of the authorized specification. In all examples shown and discussed herein, any specific value should be construed as illustrative only and not as restrictive. Accordingly, other examples of the exemplary embodiments may have different values. It should be noted that similar reference signs and letters refer to similar items in the following figures, so once a certain item is defined in one figure, it does not require further discussion in subsequent figures.

In the description of the present invention, it should be understood that orientation or position relationships indicated by orientation words such as "front, back, upper, lower, left, right", "transverse, longitudinal, vertical, horizontal" and "top, bottom" and the like are generally orientation or position relationships shown on the basis of the drawings, and are merely for the convenience of describing the present invention and simplifying the description, in the absence of opposite statements, these orientation words do not indicate or imply that the referred apparatuses or elements must have specific orientations or must be constructed and operated in specific orientations, and thus cannot be construed as limiting the protection scope of the present invention; and the orientation words "inside and outside" refer to the inside and outside of the contours of the components themselves.

For the convenience of description, spatially relative terms, such as "on", "above", "on the upper surface", "over" and the like, may be used herein to describe spatial position relationships between one device or feature and other devices or features shown in the figures. It should be understood that, the spatially relative terms are intended to contain different orientations of a device in use or operation in addition to the orientations described in the figures. For example, if the device in the figures is turned over, the device, which is described as "above other devices or structures" or "over other devices or structures" would then be positioned as "below other devices or structures" or "beneath other devices or structures". Thus, the exemplary term "above" may include both orientations of "above" and "below". The device may also be otherwise positioned (rotated by 90 degrees or at other orientations), and the spatially relative descriptions used herein are interpreted accordingly.

In addition, it should be noted that the terms "first", "second" and the like are used for defining components and parts, and are merely for the convenience of distinguishing the corresponding components and parts, and unless otherwise stated, the above words have no special meaning, and thus cannot be construed as limiting the protection scope of the present invention.

The above descriptions are only some embodiments of the present invention, and are not intended to limit the present invention. For those skilled in the art, the present invention may have various modifications and changes. Any modifications, equivalent replacements, improvements and the like, made within the spirit and principles of the present invention, shall be included within the protection scope of the present invention.

## Claims

1. An electronic expansion valve, comprising:
a valve seat (10), having a valve cavity (101) and a mounting port (102), which are in communication with each other, wherein the valve seat (10) further has a valve port (103), the valve port (103) is in communication with the valve cavity (101), and the valve seat (10) is provided with a first limiting structure;
a nut seat (20), having a first end and a second end, which are disposed opposite to each other, wherein the first end of the nut seat (20) is disposed at the mounting port (102), and the first end of the nut seat (20) is provided with a second limiting structure;
a guide sleeve (30), disposed in the valve cavity (101), wherein the guide sleeve (30) has a first end and a second end, which are disposed opposite to each other, an outer peripheral surface of the first end of the guide sleeve (30) is in limiting fit with the first limiting structure, and an outer peripheral surface of the second end of the guide sleeve (30) is in limiting fit with the second limiting structure, so as to limit a position of the guide sleeve (30); and
a valve core assembly (40), disposed through the guide sleeve (30), wherein the valve core assembly (40) is used to adjust a flow rate at the valve port (103).

2. The electronic expansion valve according to claim 1, wherein a bottom of the valve cavity (101) is provided with a first limiting groove (104), the first limiting groove (104) is located on a periphery of the valve port (103), and the first end of the guide sleeve (30) is disposed through the first limiting groove (104) and is in limiting fit with an inner wall of the first limiting groove (104).

3. The electronic expansion valve according to claim 2, wherein a cross section of the first limiting groove (104) is circular, and the first end of the guide sleeve (30) is in interference fit with the first limiting groove (104).

4. The electronic expansion valve according to claim 2, wherein a depth of the first limiting groove (104) is greater than or equal to 1.5 mm.

5. The electronic expansion valve according to claim 3, wherein the valve port (103) is disposed at a bottom of the first limiting groove (104) and is coaxially disposed with the first limiting groove (104).

6. The electronic expansion valve according to claim 5, wherein the valve seat (10) comprises a body portion (11) and a protrusion portion (12), which are integrally connected in an axial direction, and an end of the valve port (103) away from the first limiting groove (104) extends to an end face of the protrusion portion (12).

7. The electronic expansion valve according to claim 1, wherein the first end of the nut seat (20) is provided with a limiting hole (201), the limiting hole (201) is internally provided with a stepped surface, the second end of the guide sleeve (30) is disposed through the limiting hole (201) and is in interference fit with the limiting hole (201), and an end face of the second end of the guide sleeve (30) abuts against the stepped surface.

8. The electronic expansion valve according to claim 6, wherein a side wall of the valve seat (10) is provided with a first communicating hole (105), the electronic expansion valve further comprises a first communicating pipe (01) and a second communicating pipe (02), the first communicating pipe (01) is in communication with the first communicating hole (105), and the second communicating pipe (02) is sleeved on a periphery of the protrusion portion (12) and is welded and fixed with the valve seat (10).

9. The electronic expansion valve according to claim 8, wherein an end face of an end of the body portion (11) connected with the protrusion portion (12) is provided with an avoidance groove (111), the avoidance groove (111) is annularly formed in the periphery of the protrusion portion (12), a diameter of the avoidance groove (111) is greater than an outer diameter of the second communicating pipe (02), and an end portion of the second communicating pipe (02) is located in the avoidance groove (111).

10. The electronic expansion valve according to claim 8, wherein in an axial direction of the valve seat (10), there is an interval between the first communicating hole (105) and an inner end face of an end of the valve seat (10) away from the mounting port (102).

11. The electronic expansion valve according to claim 1, wherein the electronic expansion valve further comprises:
a bushing (100), wherein an open end of the bushing (100) is fixed with an end of the valve seat (10) away from the valve port (103), and the bushing (100) is in communication with the valve seat (10) and forms a valve body with the valve seat (10);
a rotor assembly (90), rotatably disposed in the bushing (100), wherein a diameter of the second end of the nut seat (20) is less than a diameter of the first end of the nut seat (20), and the second end of the nut seat (20) is disposed through the rotor assembly (90);
a screw rod (50), disposed through the nut seat (20) and in threaded fit with the nut seat (20), wherein the screw rod (50) has a third end and a fourth end, which are disposed opposite to each other, the third end of the screw rod (50) is connected with the rotor assembly (90), and the fourth end of the screw rod (50) is in driving connection with the valve core assembly (40), so that the valve core assembly (40) is able to adjust the flow rate at the valve port (103);
a motion guide sheet (60), having a connection segment (61) and an extension segment (62), which are connected with each other, wherein the connection segment (61) is connected with the rotor assembly (90) and/or the screw rod (50), the extension segment (62) is located on an outer side of the nut seat (20), the extension segment (62) has a connection end and a free end, which are disposed opposite to each other, the free end is disposed towards the nut seat (20), the connection end is connected with the connection segment (61), and a distance between the connection end and an axis of the screw rod (50) is less than a distance between the free end and the axis of the screw rod (50);
a spiral guide rail (70), annularly disposed on a periphery of the nut seat (20); and
a stop ring (80), slidably disposed in the spiral guide rail (70), wherein the stop ring (80) has a first limit position and a second limit position, which are disposed opposite to each other in an axial direction of the nut seat (20), and the motion guide sheet (60) is in driving connection with the stop ring (80), so that the stop ring (80) is able to move between the first limit position and the second limit position.

12. The electronic expansion valve according to claim 11, wherein the extension segment (62) comprises a first segment (621), a bent structure (622) and a second segment (623), which are connected in sequence, the first segment (621) is connected with the connection segment (61), and an end of the second segment (623) away from the first segment (621) forms the free end.

13. The electronic expansion valve according to claim 12, wherein an extension direction of the first segment (621) is the same as an axial direction of the screw rod (50), and an extension direction of the second segment (623) is the same as the axial direction of the screw rod (50).

14. The electronic expansion valve according to claim 12, wherein the bent structure (622) comprises a transition segment, an included angle is formed between an extension direction of the transition segment and an axial direction of the screw rod (50), in a direction from the first end to the second end of the nut seat (20), a distance between the transition segment and an axis of the rotor assembly (90) gradually increases.

15. The electronic expansion valve according to claim 11, wherein,
the rotor assembly (90) comprises a rotor body (91) and a connecting piece (92), wherein the rotor body (91) is annularly disposed on the periphery of the nut seat (20), and the connecting piece (92) is disposed on the rotor body (91) and is located on an end of the nut seat (20) away from the valve port (103); and
a first punch hole (921) is formed in the connecting piece (92), the connection segment (61) of the motion guide sheet (60) is located on an end of the connecting piece (92) away from the nut seat (20) and is connected with the connecting piece (92) and/or the screw rod (50), and the connection end of the extension segment (62) is disposed through the first punch hole (921) and is connected with the connection segment (61).

16. The electronic expansion valve according to claim 15, wherein a side of the connecting piece (92) away from the nut seat (20) is provided with a second limiting groove (922), and at least part of the connection segment (61) is located in the second limiting groove (922) to limit a relative position between the connection segment (61) and the connecting piece (92) in a circumferential direction; and a second punch hole (923) is formed in an end face of an end of the connecting piece (92) close to the nut seat (20), the second punch hole (923) is in communication with the second limiting groove (922), the third end of the screw rod (50) is disposed through the second punch hole (923) and is connected with the connection segment (61), and the third end of the screw rod (50) is connected with the connecting piece (92).

17. The electronic expansion valve according to claim 11, wherein the stop ring (80) has a first matching portion (81) and a second matching portion (82), the first matching portion (81) and the second matching portion (82) are distributed at intervals in an axial direction of the stop ring (80), both the first matching portion (81) and the second matching portion (82) extend in a radial direction of the stop ring (80), and both the first matching portion (81) and the second matching portion (82) are able to abut against the motion guide sheet (60).

18. The electronic expansion valve according to claim 17, wherein a center line of the first matching portion (81) and a center line of the second matching portion (82) are located on a same plane as an axis of the stop ring (80), and both the first matching portion (81) and the second matching portion (82) are located on a same side of the motion guide sheet (60).

19. The electronic expansion valve according to claim 17, wherein the first matching portion (81) and the second matching portion (82) are disposed in a staggered manner in the axial direction of the stop ring (80), and the motion guide sheet (60) is located between the first matching portion (81) and the second matching portion (82).

20. The electronic expansion valve according to claim 17, wherein the electronic expansion valve further comprises:
a first stop portion (21) and a second stop portion (22), both the first stop portion (21) and the second stop portion (22) are disposed on an outer peripheral surface of the nut seat (20), the first stop portion (21) and the second stop portion (22) are distributed in the axial direction of the nut seat (20), the stop ring (80) is located between the first stop portion (21) and the second stop portion (22), the first stop portion (21) is in stop fit with the first matching portion (81), and the second stop portion (22) is in stop fit with the second matching portion (82).
